# EUROPÄISCHE PATENTANMELDUNG

(11) **EP 1 163 977 A2**
(43) Veröffentlichungstag der Anmeldung: **19.12.2001**
(21) Anmeldenummer: 01111801.5
(22) Anmeldetag: 16.05.2001
(51) Int. Cl.: B23Q 11/02

(54) **Verfahren und Vorrichtung zum Reinigen von Werkzeugen für eine Spaltanlage**

(30) Priorität: 14.06.2000 DE 10029136
(71) Anmelder: Norder Lagertechnik GmbH, 26506 Norden (DE)
(72) Erfinder: Glave, Volker, 26524 Berumber (DE)
(74) Vertreter: Siekmann, Gunnar, Dipl.-Phys.

(57) **Zusammenfassung**

Bei einer Vorrichtung und einem Verfahren zum Reinigen von Werkzeugen für eine Spaltanlage weist die Vorrichtung eine Aufnahmeeinrichtung zur Aufnahme der Werkzeuge auf, und weiterhin weist die Vorrichtung eine Waschkammer mit einem offenen Abschnitt zur Zuführung der Werkzeuge auf, so daß die Aufnahmeeinrichtung mit den Werkzeugen in die Waschkammer verfahrbar ist und mit einem zu dem offenen Abschnitt der Waschkammer korrespondierenden Wandabschnitt die Waschkammer verschließt. Mit dieser Vorrichtung und mit einem Verfahren zum Reinigen der Werkzeuge ist es möglich, parallel zum Betrieb einer Spaltanlage die benutzten Werkzeuge zu reinigen.

## Beschreibung

Die Erfindung betrifft ein Verfahren zum Reinigen von Werkzeugen. Weiterhin betrifft die Erfindung eine Vorrichtung zum Reinigen von Werkzeugen.

Derartige Spaltanlagen werden zum Spalten, insbesondere zum Längsspalten von Bandstahl verwendet. Dabei wird der Bandstahl durch eine Spaltschere geführt, auf der oben und unten Werkzeuge, nämlich Distanzstücke und Messer angeordnet sind, die den Bandstahl in Streifen definierter Breite schneiden. Eine derartige Vorrichtung ist beispielsweise in EP 0 911 104 A1 beschrieben.

Beim Schneiden von Bändern in unterschiedlichen Qualitäten, insbesondere Präzisionsbandstahl, ist es häufig erforderlich, daß die Werkzeuge gereinigt werden müssen. Dies wird in der Regel manuell durchgeführt.

Der Erfindung liegt die Aufgabe zugrunde, ein Verfahren und eine Vorrichtung zum Reinigen von Werkzeugen für eine Spaltanlage zu schaffen, mit der eine weitestgehend automatisierte Reinigung der Werkzeuge möglich ist.

Die Lösung dieser Aufgabe erfolgt verfahrensmäßig mit den Merkmalen des Patentanspruchs 1 und vorrichtungsmäßig mit den Merkmalen des Patentanspruchs 14. Vorteilhafte Weiterbildungen der Erfindung sind in den Unteransprüchen beschrieben.

Nach dem Grundgedanken der Erfindung werden die Werkzeuge, insbesondere Messer aber auch Distanzstücke, auf eine Aufnahmeeinrichtung aufgelegt und die Aufnahmeeinrichtung mit den Werkzeugen in eine Waschkammer bewegt, wobei die Werkzeuge in der Waschkammer gereinigt und anschließend die Aufnahmeeinrichtung mit den gereinigten Werkzeugen aus der Waschkammer herausbewegt wird. Mit einem derartigen Verfahren läßt sich eine zeitliche Trennung und Pufferung von dem eigentlichen Bestückungsvorgang erreichen, so daß eine automatische Reinigung der Werkzeuge erfolgen kann, ohne daß die parallele Bestückung der Spaltanlage verzögert wird.

In einer bevorzugten Weiterbildung der Erfindung werden die Werkzeuge mit einem bestimmten Abstand zueinander auf der Aufnahmeeinrichtung abgelegt, so daß zwischen den einzelnen Werkzeugen Raum verbleibt, durch den Reinigungsmittel auch an die Seiten der Werkzeuge gelangen kann. Besonders bevorzugt ist es, die Werkzeuge auf der Aufnahmeeinrichtung lösbar zu befestigen, insbesondere festzuklemmen, so daß diese den vorbestimmten Abstand zueinander halten und während des Reinigungsvorganges nicht verrutschen. Günstig ist es auch, die Werkzeuge von innen zu klemmen, so daß die besonders relevanten äußeren Schneidflächen frei zugänglich sind.

Bevorzugt wird die Aufnahmeeinrichtung vor der Bewegung in die Waschkammer gedreht. Dadurch ist es möglich, die Aufnahmeeinrichtung an der von der Waschkammer abgewandten Seite zu beladen und nach dem Beladevorgang die Aufnahmeeinrichtung zu drehen, bevorzugt um 180°, und dann in die eigentliche Waschkammer einzufahren. Die Waschkammer wird beim Einfahren der Aufnahmeeinrichtung in die Waschkammer durch die Aufnahmeeinrichtung geschlossen. Auf diese Weise ist sichergestellt, daß die Waschkammer nach dem Einfahren der Werkzeuge geschlossen ist und ein besonders sparsamer Reinigungsvorgang erfolgen kann, bei dem das verwendete Wasser gesammelt wird und nicht in das eigentliche Werkzeuglager gelangen kann.

Die Werkzeuge werden in der Waschkammer bevorzugt mit Wasser und Flüssigkeiten eingesprüht. Dazu sind Düsen vorgesehen, die rings um den zu reinigenden Werkzeugring angeordnet sind. Bevorzugt werden diese Düsen während des Reinigens verfahren, so daß durch diese Maßnahme auch ein vergleichsweise geringer Wasserverbrauch gewährleistet wird. Weiterhin ist es günstig, die Werkzeuge während des Reinigungsvorganges zu drehen, insbesondere in Umfangsrichtung zu drehen, so daß auch durch diese Drehbewegung sichergestellt ist, daß sämtliche Punkte des Werkzeuges von den Düsen erreicht werden.

Die Werkzeuge werden günstigerweise mit einem Reinigungsmittel in wässeriger Lösung eingesprüht und anschließend mit Frischwasser eingesprüht, um die Werkzeuge wieder vollständig zu reinigen. Danach folgt ein Konservierungs- und Trocknungsprozeß durch Abblasen mit Heißluft oder Preßluft. Günstigerweise werden die Werkzeuge anschließend noch durch Luft oder auch durch eine Infrarotheizstrahlung nachgetrocknet. In einer anderen Weiterbildung der Erfindung werden die Werkzeuge mit einem Wasserstrahl und/oder mit einem CO₂-Eisstrahl gereinigt. Auf diese Weise können auch besonders hartnäckige Verschmutzungen, insbesondere Kaltaufschweißungen von Aluminium oder Zink entfernt werden. Bevorzugt werden alle oder zumindest die meisten Reinigungsprozesse in derselben Waschkammer durchgeführt. Auf diese Weise ist sichergestellt, daß insbesondere Wasser in der Waschkammer verbleibt und recycelt werden kann.

Der wesentliche Aspekt der Erfindung besteht in vorrichtungsmäßiger Hinsicht darin, daß die Vorrichtung eine Aufnahmeeinrichtung zur Aufnahme der Werkzeuge aufweist, daß die Vorrichtung eine Waschkammer mit einem offenen Abschnitt zur Zuführung der Werkzeuge aufweist und daß die Aufnahmeeinrichtung in die Waschkammer verfahrbar ist und einen zu dem offenen Abschnitt der Waschkammer korrespondierenden Wandabschnitt aufweist. Die Vorrichtung zum Reinigen weist daher einerseits die Aufnahmeeinrichtung und andererseits die Waschkammer auf, die sich dahingehend ergänzen, daß beide zusammen beim Einfahren der Aufnahmeeinrichtung in die Waschkammer eine komplett geschlossene Waschkammer bilden.

Bevorzugt weist die Aufnahmeeinrichtung mehrere Lagerdorne auf, die günstigerweise übereinander angeordnet sind, so daß auf einem vergleichsweise kleinen Raum eine Vielzahl von Werkzeugen abgelegt werden können. Auf diesen Lagerdorn werden die Werkzeuge beabstandet zueinander angeordnet. Hierzu kann in bestimmten Abständen in den Lagerdornen eine Ausnehmung vorgesehen sein, so daß die Plazierung der Werkzeuge besonders leicht erfolgen kann. Weiterhin weist die Aufnahmeeinrichtung bevorzugt eine Klemmeinrichtung auf, wobei es besonders bevorzugt ist, jedem Lagerdorn mindestens einen verfahrbaren Klemmdorn zuzuordnen, so daß nach dem Auflegen der Werkzeuge auf einen Lagerdorn der verfahrbare Klemmdorn so verfährt, daß das ringartige Werkzeug an zwei Punkten innenseitig geklemmt ist. Die Aufnahmeeinrichtung weist dabei an mindestens zwei Seiten Lagerdorne auf, wobei dann eine Seite mit Lagerdornen der Waschkammer zugewandt ist, während die andere Seite mit Lagerdornen dem eigentlichen Werkzeuglager zugewandt ist und auf dieser Seite bestückt werden kann. Denkbar ist es auch, daß an drei oder vier Seiten der Aufnahmeeinrichtung Lagerdorne angeordnet sind. Die Aufnahmeeinrichtung wird dann nach dem Bestücken der einen Seite und dem Reinigen der Werkzeuge, die auf den Lagerdornen der anderen Seite angeordnet sind, aus der Waschkammer herausverfahren und um 180° gedreht, so daß die gereinigten Werkzeuge wieder dem Lager zugeführt werden können, während die anderen Werkzeuge in der Waschkammer gereinigt werden. Dabei ist bevorzugt hinter jedem Bereich von Lagerdornen der Aufnahmeeinrichtung ein Wandabschnitt angeordnet, der zu dem offenen Abschnitt der Waschkammer korrespondiert, so daß beim Hereinfahren der mit Werkzeugen bestückten Lagerdorne in die Waschkammer der offene Wandabschnitt automatisch geschlossen wird. Bevorzugt ist dieser rechteckig ausgebildet.

Die Waschkammer ist bevorzugt in mehrere Abschnitte, die auch als Kleinkammern bezeichnet werden, unterteilt, die in ihrer Größe jeweils etwas größer als ein Werkzeugring ausgebildet sind, so daß jeder Lagerdorn mit den daran angeordneten Werkzeugen in einen getrennten Abschnitt der Waschkammer einfährt und in jedem dieser Abschnitte mindestens ein Ring mit Düsen angeordnet ist, aus denen die Werkzeuge mit Reinigungsmitteln beaufschlagt werden. Es können hierbei entweder mehrere Ringe mit Düsen vorgesehen sein, so daß der gesamte Bereich der Waschkammer oder des Abschnitts der Waschkammer und die darin eingefahrenen Werkzeuge eingesprüht wird oder es ist ein einzelner Düsenring vorgesehen, der die eingefahrenen Werkzeuge umfaßt und verfahrbar ist, so daß sämtliche Werkzeuge mit einem Ring mit Düsen erfaßt werden. Die Düsen sind bevorzugt so ausgelegt, daß durch diese sowohl Wasser mit Reinigungsmitteln, Frischwasser und auch Heißluft oder Preßluft geführt werden kann.

Nachfolgend wird die Erfindung anhand eines in der Zeichnung dargestellten bevorzugten Ausführungsbeispiels weiter erläutert. Im einzelnen zeigen die schematischen Darstellungen in:
- Fig. 1:: eine geschnittene Draufsicht auf eine erfindungsgemäße Vorrichtung mit einem Werkzeuglager;
- Fig. 2:: eine geschnittene Seitenansicht einer erfindungsgemäßen Vorrichtung und
- Fig. 3:: eine weitere geschnittene Seitenansicht einer erfindungsgemäßen Vorrichtung mit ausgefahrenem Klemmdorn.

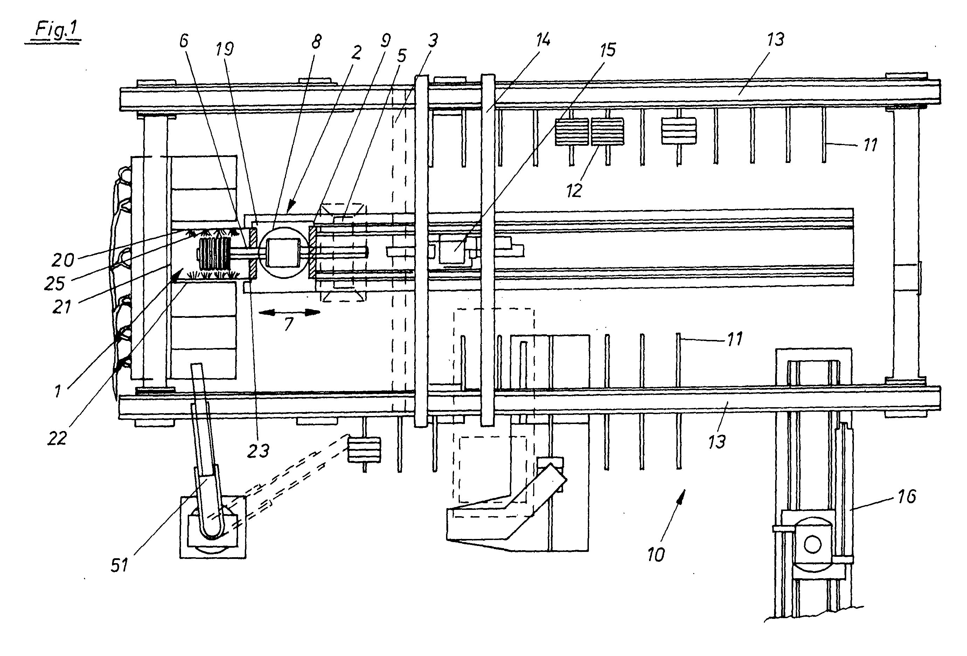

In Fig. 1 ist eine geschnittene Draufsicht auf eine erfindungsgemäßen Vorrichtung mit einem daran angeschlossenen Werkzeuglager dargestellt. Die Vorrichtung weist im wesentlichen eine Waschkammer 1 und eine Aufnahmeeinrichtung 2 auf. Eine Trennwand 3, die verschiebbar ist, trennt die Vorrichtung zum Reinigen der Werkzeuge von dem Werkzeuglager 10 mit den Lagerdornen 11, auf denen ringförmige Werkzeuge 12, insbesondere Schneidringe und Distanzstücke, gelagert werden. Das Lager 10 ist beidseitig von Tragholmen 13 begrenzt, auf denen ein Querholm 14 verfahrbar ist, an dem ein Roboter 15 angeordnet ist, der auf die Werkzeuge 12 zugreift und damit Wellen auf einem Drehkreuz 16 bestückt, wobei die Werkzeuge von den Wellen dann einer Spaltschere zugeführt werden. Die von der Spaltschere rückgeführten Werkzeuge sind nach Gebrauch verschmutzt und werden dann von dem Roboter 15 bei zuvor entfernter Trennwand 3 der Aufnahmeeinrichtung 2, genauer dem Lagerdorn 5, zugeführt. Die Aufnahmeeinrichtung 2 ist in Richtung des Pfeils 7 verfahrbar und kann um die Führung 8 gedreht werden. Nachdem also die in der Waschkammer 1 befindlichen Werkzeuge gereinigt und der Lagerdorn 5 bestückt worden ist, fährt die Aufnahmeeinrichtung 2 in der Figur nach rechts in Richtung des Pfeils 7 und die Aufnahmeeinrichtung 2 dreht sich um insgesamt 180°, so daß die gereinigten Werkzeuge mit Hilfe des Roboters 15 von dem Lagerdorn 6 entnommen werden können. Der zwischenzeitlich mit Werkzeugen bestückte Lagerdorn 5 kann dann in die Waschkammer 1 zusammen mit der gesamten Aufnahmeeinrichtung 2 eingefahren werden. Wichtig ist dabei, daß im Endbereich der Lagerdorne 5, 6 ein Wandabschnitt 9 bzw. 19 angeordnet ist, der in seinen Abmessungen mit der offenen Vorderseite der Waschkammer 1 korrespondiert. Die Waschkammer 1 weist einen Boden, ein Dach und drei Seitenwände 20, 21 und 22 und einen offenen Abschnitt 23 auf. Dieser offene Abschnitt wird durch einen der Wandabschnitte 9 oder 19 der Aufnahmeeinrichtung 2 geschlossen, so daß die Waschkammer 1 dann im Betrieb vollständig geschlossen ist.

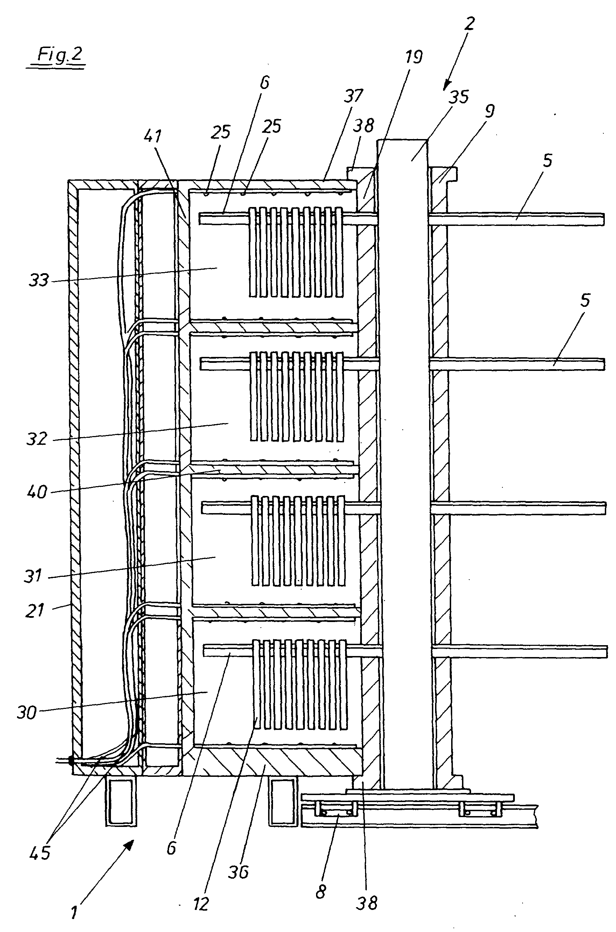

In Fig. 2 ist eine geschnittene Seitenansicht durch die Waschkammer 1 mit der daran anschließenden Aufnahmeeinrichtung 2 dargestellt. Die Aufnahmeeinrichtung 2 weist einen zentralen Pfeiler 35 auf, an dem an beiden Seiten übereinander angeordnete Lagerdornen 5 und 6 angeordnet sind. Im vorliegenden Beispiel sind auf jeder Seite vier übereinander angeordnete Lagerdornen vorgesehen, die derart voneinander beabstandet sind, daß an jedem Lagerdorn Werkzeuge aufgehängt werden können. Im Endbereich der Lagerdorne 5, 6 sind direkt an dem zentralen Pfeiler 35 Wandabschnitte 9 und 19 vorgesehen, die oben und unten Vorsprünge 38 aufweisen, die den Boden 36 der Waschkammer 1 untergreifen bzw. den Deckel 37 der Waschkammer 1 übergreifen. Der Vorsprung 38 ist ganz umlaufend ausgebildet, so daß auch die Seitenwände der Waschkammer umgriffen werden und insgesamt ein sicherer, dichtender Abschluß des freien vorderen Abschnittes der Waschkammer 1 mit Hilfe des Wandabschnitts 19 erreicht wird. Die Waschkammer 1 ist mit Hilfe von insgesamt 3 durchlaufenden Zwischenböden 40, die sich von einer vertikalen hinteren Wand 41 bis zu dem vorderen Abschnitt 23 erstrecken, in vier Kleinkammern 30, 31, 32, 33 unterteilt. Diese Kleinkammern sind derart dimensioniert, daß jede Kleinkammer gerade zur Aufnahme eines Lagerdorns 6 mit daran hängenden Werkzeugen 12 dient. An der Unterseite und Oberseite jeder Kleinkammer, das heißt, insbesondere an den Zwischenböden 40 sowie an dem Boden 36 und am Dach 37 sowie an den Seitenwänden der Waschkammer 1 sind eine Vielzahl von Düsen 25 angeordnet, aus denen von allen Seiten Reinigungsmittel, Frischwasser oder Luft auf die Werkzeuge 12 geführt werden kann. Dies erfolgt über eine Vielzahl von Zuleitungen 45, die zwischen der Rückwand 21 und der vertikalen Zwischenwand 41 nach oben geführt sind und dann über die Zwischenböden 40 zu den Düsen 25 geführt sind. Die Düsen sind bevorzugt in Form von Ringen ausgebildet, die in einer Ebene mit den ringförmigen Werkzeugen ausgerichtet sind, so daß in jeder Kleinkammer 30, 31, 32, 33 mindestens ein umlaufender Ring mit Düsen 25 angeordnet ist, der über die Zuführungsleitung 45 versorgt wird. In der Figur sind jeweils eine Mehrzahl von Ringen vorgesehen. Es ist jedoch auch möglich, lediglich einen Ring mit Düsen vorzusehen, der in der Kleinkammer hin- und her verfahren wird und dadurch sämtliche Werkzeuge 12 erreicht. Die zentrale Säule oder der zentrale Pfeiler 35 ist in seinem Bodenbereich auf einer Führung 8 drehbar ausgebildet, so daß nach dem Verfahren der gesamten Aufnahmeeinrichtung 2 nach rechts, die Aufnahmeeinrichtung 2 gedreht werden kann.

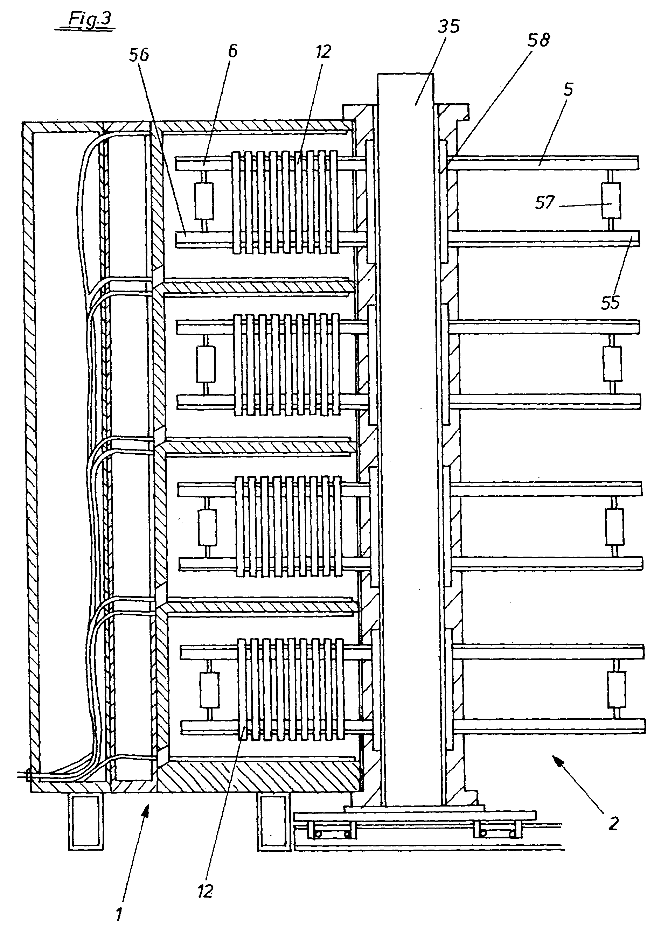

In Fig. 3 ist eine geschnittene Seitenansicht durch eine erfindungsgemäße Vorrichtung dargestellt, die im wesentlichen der Darstellung in Fig. 2 entspricht. Bezüglich der übereinstimmenden Bauteile wird auf die Beschreibung der Fig. 2 Bezug genommen. In Fig. 3 ist ergänzend noch dargestellt, daß dem Lagerdorn 5 und 6 jeweils ein Klemmdorn 55 und 56 zugeordnet ist, der mit Hilfe eines Motors 57 verfahrbar ist. Der Klemmdorn 55 ist also zunächst vergleichsweise nah an dem Lagerdorn 5 positioniert. Dann werden die Werkzeuge 12 auf einem Lagerdorn 5 oder 6 abgelegt und im Anschluß daran wird der Klemmdorn 55 oder 56 mit Hilfe des Motors 57 von dem Lagerdorn 5 wegbewegt, wobei in der Halteeinrichtung 58 eine entsprechende Schiene vorgesehen ist, in der der Klemmdorn 55 verfahrbar ist, bis der Klemmdorn 55 an die Innenseite des Werkzeuges 12 anschlägt und so zusammen mit dem Lagerdorn 5 eine Innenklemmung des Werkzeuges 12 bewirkt. Mit Hilfe der Halteeinrichtung 58 kann der Lagerdorn 5 mit dem Klemmdorn 55 und den daran aufgehängten Werkzeugen gedreht werden, so daß auch insofern das Werkzeug besonders gut von allen Seiten erreichbar ist.

Der eigentliche Waschvorgang wird wie folgt durchgeführt: Über die Düsen 25 wird Wasser mit Reinigungszusätzen von allen Seiten auf die einzeln aufgehängten und sich drehenden Werkzeuge 25 gespritzt. Nach einem solchermaßen durchgeführten Vorgang erfolgt eine Frischwasserreinigung mit einem anschließenden Konservierungs- und Trocknungsprozeß durch Abblasen mit Heißluft und/der Preßluft. Die Reinigungszeiten werden über eine Programmsteuerung in Abhängigkeit vom Verschmutzungsgrad festgelegt. Nach dem Ausfahren der Aufnahmeeinrichtung 2 aus der Waschkammer 1 wird die Aufnahmeeinrichtung 2 mit der inzwischen erneut beladenen gegenüberliegenden Seite gedreht und fährt in die Waschkammer 1 ein. Der Prozeß wiederholt sich. Die jetzt geschwaschenen und außenstehenden Werkzeuge 12 werden durch Luft oder falls notwendig durch eine Infrarot-Heizstrahlung nachgetrocknet. Die Rücklagerung der Werkzeuge 12 ins Lager 10 übernimmt der Roboter 15. Das Wasser wird zur Wiederverwendung aufbereitet. Mit Hilfe eines in Fig. 1 dargestellten Knickarmroboters 51 können besonders hartnäckig verschmutzte Werkzeuge entnommen und in einer gesonderten Strahlkabine durch Wasserstrahl bzw. CO₂-Eisstrahlen oder andere Formen von Strahlmitteln gereinigt werden.

## Patentansprüche

1. Verfahren zum Reinigen von Werkzeugen für eine Spaltanlage,
**dadurch gekennzeichnet,**
**daß** die Werkzeuge auf einer Aufnahmeeinrichtung abgelegt werden,
**daß** die Aufnahmeeinrichtung mit den Werkzeugen in eine Waschkammer bewegt wird,
**daß** die Werkzeuge in der Waschkammer gereinigt werden und
**daß** die Aufnahmeeinrichtung mit den gereinigten Werkzeugen aus der Waschkammer herausbewegt werden.

2. Verfahren nach Anspruch 1, **dadurch gekennzeichnet, daß** die Werkzeuge mit einem bestimmten Abstand zueinander auf die Aufnahmeeinrichtung abgelegt werden.

3. Verfahren nach einem der Ansprüche 1 oder 2, **dadurch gekennzeichnet, daß** die Werkzeuge auf der Aufnahmeeinrichtung lösbar befestigt werden.

4. Verfahren nach einem der vorgehenden Ansprüche, **dadurch gekennzeichnet, daß** die Aufnahmeeinrichtung vor der Bewegung in die Waschkammer gedreht wird.

5. Verfahren nach einem der vorhergehenden Ansprüche,
**dadurch gekennzeichnet, daß** die Waschkammer beim Einfahren der Aufnahmeeinrichtung in die Waschkammer durch die Aufnahmeeinrichtung geschlossen wird.

6. Verfahren nach einem der vorhergehenden Ansprüche,
**dadurch gekennzeichnet, daß** die Werkzeuge in der Waschkammer mit Wasser und Reinigungszusätzen eingesprüht werden.

7. Verfahren nach einem der vorhergehenden Ansprüche,
**dadurch gekennzeichnet, daß** Sprühdüsen während des Reinigens verfahren werden.

8. Verfahren nach einem der vorhergehenden Ansprüche,
**dadurch gekennzeichnet, daß** die Werkzeuge während des Reinigens gedreht werden.

9. Verfahren nach einem der vorhergehenden Ansprüche,
**dadurch gekennzeichnet, daß** die Werkzeuge mit einem Reinigungsmittel in wässeriger Lösung eingesprüht werden.

10. Verfahren nach einem der vorhergehenden Ansprüche,
**dadurch gekennzeichnet, daß** die Werkzeuge mit Frischwasser eingesprüht werden.

11. Verfahren nach einem der vorhergehenden Ansprüche,
**dadurch gekennzeichnet, daß** die Werkzeuge getrocknet werden.

12. Verfahren nach einem der vorhergehenden Ansprüche,
**dadurch gekennzeichnet, daß** die Werkzeuge mit Wasserstrahl und/oder CO₂ -Eisstrahl gereinigt werden.

13. Verfahren nach einem der vorhergehenden Ansprüche,
**dadurch gekennzeichnet, daß** alle Reinigungsprozesse in derselben Waschkammer durchgeführt werden.

14. Vorrichtung zum Reinigen von Werkzeugen für eine Spaltanlage, insbesondere zur Durchführung des Verfahrens nach einem der Ansprüche 1 bis 13,
**dadurch gekennzeichnet,**
**daß** die Vorrichtung eine Aufnahmeeinrichtung (2) zur Aufnahme der Werkzeuge aufweist,
**daß** die Vorrichtung eine Waschkammer (1) mit einem offenen Abschnitt (23) zur Zuführung der Werkzeuge (12) aufweist und daß die Aufnahmeeinrichtung (2) in die Waschkammer (1) verfahrbar ist und einen zu dem offenen Abschnitt (23) der Waschkammer korrespondierenden Wandabschnitt (9, 19) aufweist.

15. Vorrichtung nach Anspruch 14, **dadurch gekennzeichnet, daß** die Aufnahmeeinrichtung mehrere Lagerdorne (5, 6) aufweist.

16. Vorrichtung nach einem der Ansprüche 14 oder 15, **dadurch gekennzeichnet, daß** die Aufnahmeeinrichtung (2) eine Klemmeinrichtung aufweist.

17. Vorrichtung nach einem der Ansprüche 14 bis 16, **dadurch gekennzeichnet, daß** die Klemmeinrichtung mindestens einen verfahrbaren Klemmdorn (55, 56) aufweist.

18. Vorrichtung nach einem der Ansprüche 14 bis 17, **dadurch**
**gekennzeichnet, daß** an mindestens zwei Seiten der Aufnahmeeinrichtung (2) Lagerdorne (5, 6) angeordnet sind.

19. Vorrichtung nach einem der Ansprüche 14 bis 18, **dadurch gekennzeichnet, daß** die Aufnahmeeinrichtung (2) drehbar und verfahrbar ist.

20. Vorrichtung nach einem der Ansprüche 14 bis 19, **dadurch gekennzeichnet, daß** hinter jedem Bereich von Lagerdornen (5, 6) der Aufnahmeeinrichtung (2) ein Wandabschnitt (9, 19) angeordnet ist.

21. Vorrichtung nach einem der Ansprüche 14 bis 20, **dadurch gekennzeichnet, daß** die Waschkammer (1) mehrere Kleinkammern (30, 31, 32, 33) aufweist.

22. Vorrichtung nach Anspruch 21, **dadurch gekennzeichnet, daß** in jeder Kleinkammer (30, 31, 32, 33) der Waschkammer (1) mindestens ein Ring mit Düsen (25) angeordnet ist.

23. Vorrichtung nach Anspruch 22, **dadurch gekennzeichnet, daß** der Ring mit Düsen (25) verfahrbar ist.
